# EUROPEAN PATENT APPLICATION

(11) **EP 4 379 002 A1**
(43) Date of publication of application: **05.06.2024**
(21) Application number: 22849256.7
(22) Date of filing: 13.07.2022
(51) Int. Cl.: C08L 81/02, C08K 5/20, C08K 7/14, C08L 23/08, C08L 23/12, C08L 23/26, C08L 91/06

(54) **POLYARYLENE SULFIDE COMPOSITION**

(30) Priority: 28.07.2021 JP 2021123489
(71) Applicant: Tosoh Corporation, Yamaguchi 746-8501 (JP)
(72) Inventor: YAMAMOTO, Nobuhiro, Yokkaichi-shi Mie 510-8540 (JP); YAMANO, Naoki, Yokkaichi-shi Mie 510-8540 (JP)
(74) Representative: Vossius & Partner Patentanwälte Rechtsanwälte mbB
(86) International application number: PCT/JP2022/027522
(87) International publication number: WO 2023/008192

(57) **Abstract**

A polyarylene sulfide composition having excellent mechanical characteristics, acid resistance and heat/cold resistance is provided. A polyarylene sulfide composition comprising from 30 to 70 wt% of polyarylene sulfide (A), from 2 to 10 wt% of an ethylene polymer (B) and from 20 to 60 wt% of glass fiber (C), wherein the glass fiber (C) has a boron oxide content of at most 1.5 wt% and a fluorine content of at most 0.1 wt%.

## Description

### TECHNICAL FIELD

The present invention relates to a polyarylene sulfide composition which has excellent chemical resistance, heat/cold resistance, fluidity and acid resistance in addition to heat resistance, mechanical strength and electrical insulation properties inherent in polyarylene sulfides, and is useful especially for making automobile parts or electric or electronic parts.

### BACKGROUND ART

Polyarylene sulfide (hereinafter abbreviated as PAS) represented by poly(p-phenylene sulfide) (hereinafter abbreviated as PPS) has excellent mechanical characteristics, heat characteristics, electrical characteristics and chemical resistance and is widely used in many electric and electronic equipment members and automobile equipment members and office automation equipment members.

PAS improves greatly in mechanical strength, heat resistance and stiffness when filled with inorganic fibers such as glass fiber or inorganic particles such as calcium carbonate and talc. However, the incorporation of inorganic fiber or inorganic particles greatly sacrifices low-temperature impact resistance, heat/cold resistance and fluidity, and makes the surfaces of PAS molded products less resistant to certain strong acids. Because of these problems, PAS has only limited applications.

As an improvement of heat/cold resistance and chemical resistance, a PPS resin composition comprising PPS, a specific alumina and an ethylene copolymer is proposed (for example, in Patent Document 1).

### PRIOR ART DOCUMENTS

### PATENT DOCUMENTS

Patent Document 1: JP-A-2012-131896

### DISCLOSURE OF INVENTION

### TECHNICAL PROBLEM

The resin composition proposed in Patent Document 1 still has a problem with its mechanical strength, and it is difficult to achieve good mechanical characteristics, chemical resistance and heat/cold resistance simultaneously.

The present invention relates to a polyarylene sulfide composition having excellent mechanical characteristics, acid resistance and heat/cold resistance. Specifically speaking, the present invention aims to provide a polyarylene sulfide composition having these excellent characteristics useful for making electric or electronic parts of automobile parts.

### SOLUTION TO PROBLEM

As a result of their extensive study to solve the above-mentioned problems, the present inventors found that a resin composition comprising polyarylene sulfide, an ethylene copolymer and a specific glass fiber in a specific ratio makes a polyarylene sulfide composition having good mechanical characteristic, acid resistance and cold/heat resistance, and accomplished the present invention.

Namely, the present invention provides the following [1] to [3].
[1] A polyarylene sulfide composition comprising from 30 to 70 wt% of polyarylene sulfide (A), from 2 to 10 wt% of an ethylene polymer (B) and from 20 to 60 wt% of glass fiber (C), wherein the glass fiber (C) has a boron oxide content of at most 1.5 wt% and a fluorine content of at most 0.1 wt%.
[2] The polyarylene sulfide composition according to [1], which further comprises at least one mold release agent (D) selected from the group consisting of a polyethylene wax, a polypropylene wax, a carnauba wax and a fatty amide wax.
[3] The polyarylene sulfide composition according to [1] or [2], wherein the ethylene polymer (B) is at least one modified ethylene polymer selected from the group consisting of a copolymer (B-1) of ethylene, an alkyl ester of an α,β-unsaturated carboxylic acid and maleic anhydride, a copolymer (B-2) of ethylene and a glycidyl ester of an α,β-unsaturated carboxylic acid, a copolymer (B-3) of ethylene, a glycidyl ester of an α,β-unsaturatedcarboxylic acid and vinyl acetate, a copolymer (B-4) of ethylene, a glycidyl ester of an α,β-unsaturated carboxylic acid and an alkyl ester of an α,β-unsaturated carboxylic acid, and a modified ethylene polymer (B-5) grafted with maleic anhydride.

### ADVANTAGEOUS EFFECTS OF INVENTION

The present invention provides a polyarylene sulfide composition with good acid resistance, heat/cold resistance and fluidity, which is useful for making automobile parts or electric or electronic parts, without sacrificing the heat resistance, mechanical strength and electrical insulation properties inherent in PAS.

### DESCRIPTION OF EMBODIMENTS

Now, the present invention will be described in detail.

The polyarylene sulfide composition of the present invention comprises from 30 to 70 wt% of polyarylene sulfide (A), from 2 to 10 wt% of an ethylene polymer (B) and from 20 to 60 wt% of glass fiber (C) having a boron oxide content of at most 1.5 wt% and a fluorine content of at most 0.1 wt%.

The polyarylene sulfide (A) in the polyarylene sulfide composition of the present invention may be any polymer which generally falls under the category of polyarylene sulfide and may be a homopolymer or copolymer consisting of p-phenylene sulfide units, m-phenylene sulfide units, o-phenylene sulfide units, phenylene sulfide sulfone units, phenylene sulfide ketone units, phenylene sulfide ether units and/or biphenylene sulfide units. Specific examples of such polyarylene sulfide include poly(p-phenylene sulfide), polyphenylene sulfide sulfone, polyphenylene sulfide ketone, polyphenylene sulfide ether and the like, and among them, poly(p-phenylene sulfide) is preferred particularly to make a polyarylene sulfide composition having excellent heat resistance and strength characteristics.

The polyarylene sulfide (A) may be produced by a known process for producing polyarylene sulfide, for example, by polymerizing an alkali metal sulfide and a polyhalogenated aromatic compound in a polar solvent. The polar solvent may, for example, be N-methyl-2-pyrrolidone, N-ethyl-2-pyrrolidone, cyclohexylpyrrolidone, dimethylformamide or dimethylacetamide, and the alkali metal sulfide may, for example, be an anhydride or hydrate of sodium sulfide, rubidium sulfide or lithium sulfide and may be a reaction product of an alkali metal hydrogen sulfide and an alkali metal hydroxide. The polyhalogenated aromatic compound may, for example, be p-dichlorobenzene, p-dibromobenzene, p-diiodobenzene, m-dichlorobenzene, m-dibromobenzene, m-diiodobenzene, 4,4'dichlorodiphenyl sulfone, 4,4'-dichlorobenzophenone, 4,4'-dichlorodiphenyl ether, 4,4'-dichlorobiphenyl or the like.

The polyarylene sulfide (A) may be a linear polymer, a polymer having a crosslinked or branched structure introduced by adding a small amount of a polyhalogenated compound having at least 3 halogen atoms at the time of polymerization, a polymer having a polyarylene sulfide chain partially and/or terminally modified with a functional group such as a carboxyl group, a metal carboxylate, an alkyl group, an alkoxy group, an amino group and a nitro group, or a polymer obtained by heating in a nonoxidizing inert gas such as nitrogen, or may be a mixture of these structures. The polyarylene sulfide (A) may be deionized (by washing with an acid or hot water) or washed with an organic solvent such as acetone and methyl alcohol before or after heat curing to remove impurities such as ions and oligomers. It may be a cured polymer obtained by heat treatment in an inert gas or an oxidizing gas after polymerization.

The amount of the polyarylene sulfide (A) in the polyarylene sulfide composition of the present invention is from 30 to 70 wt%, preferably from 35 to 65 wt%. If the amount of the polyarylene sulfide is less than 30 wt%, the composition does not have enough fluidity to be molded. On the other hand, if the amount of the polyarylene sulfide is more than 70 wt%, the composition has poor mechanical characteristics.

The ethylene copolymer (B) in the polyarylene sulfide composition of the present invention may be any polymer which generally falls under the category of ethylene copolymer and is preferably at least one modified ethylene copolymer selected from the group consisting of a copolymer of ethylene, **an alkyl ester of an α,β**-unsaturated carboxylic acid and maleic anhydride, a copolymer of ethylene and a glycidyl ester of an **α,β**-unsaturated carboxylic acid, a copolymer of ethylene, a glycidyl **ester of an α,β-**unsaturated carboxylic acid and vinyl acetate, a copolymer of ethylene, a glycidyl ester **of an α,β-unsaturated carboxylic acid and an alkyl ester of an α,β**-unsaturated carboxylic acid, and a modified ethylene-α-olefin copolymer grafted with maleic anhydride to improve the heat/cold resistance of the polyarylene sulfide composition effectively.

The copolymer of ethylene, **an alkyl ester of an α,β**-unsaturated carboxylic acid and maleic anhydride may be any polymer which falls under this category, and especially, it is preferred that the weight ratio of units based on ethylene: units derived **from the alkyl ester of an α,β**-unsaturated carboxylic acid: units based on maleic anhydride is 50 to 98 :40 to 1 : 10 to 1 to secure strong adhesion of the polyarylene sulfide composition to metals. Specific examples of the copolymer of ethylene, an alkyl **ester of an α,β**-unsaturated carboxylic acid and maleic anhydride include BONDINE LX4110 (trade name) (manufactured by SK global chemical Co. Ltd.), BONDINE TX8030 (trade name) (manufactured by SK global chemical Co. Ltd.), BONDINE AX8390 (trade name) (manufactured by SK global chemical Co. Ltd.) and the like.

The copolymer of ethylene and a glycidyl **ester of an α,β**-unsaturated carboxylic acid may be any polymer which falls under this category, and especially, it is preferred that the weight ratio of units based on ethylene: units based on the glycidyl ester of an **α,β**-unsaturated carboxylic acid is 85 to 99 : 15 to 1 to secure strong adhesion of the polyarylene sulfide composition to metals. Specific examples of the copolymer of ethylene and a glycidyl **ester of an α,β**-unsaturated carboxylic acid include BONDINE AX8840 (trade name) (manufactured by SK global chemical Co. Ltd.), BONDFAST E (trade name) (manufactured by Sumitomo Chemical Co., Ltd.) and the like.

The copolymer of ethylene, a glycidyl **ester of an α,β**-unsaturated carboxylic acid and vinyl acetate may be any polymer which falls under this category, and especially, it is preferred that the weight ratio of units based on ethylene: units based on the glycidyl **ester of an α,β**-unsaturated carboxylic acid: units based on vinyl acetate is 50 to 98 : 15 to 1 : 35 to 1 to secure strong adhesion of the polyarylene sulfide composition to metals. Specific examples of the copolymer of ethylene, a glycidyl **ester of an α,β**-unsaturated carboxylic acid and vinyl acetate include BONDFAST 2B (trade name) (manufactured by Sumitomo Chemical Co., Ltd.), BONDFAST 7B (trade name) (manufactured by Sumitomo Chemical Co., Ltd.) and the like.

The copolymer of ethylene, a glycidyl **ester of an α,β**-unsaturated carboxylic acid **and an alkyl ester of an α,β**-unsaturated carboxylic acid may be any polymer which falls under this category, and especially, it is preferred that the weight ratio of units based on ethylene: units based on the glycidyl **ester of an α,β**-unsaturated carboxylic acid: units **based on the alkyl ester of an α,β-**unsaturated carboxylic acid is 50 to 98 : 10 to 1 : 40 to 1 to secure strong adhesion of the polyarylene sulfide composition to metals. Specific examples of the copolymer of the ethylene, a glycidyl **ester of an α,β-unsaturated carboxylic acid and an alkyl ester of an α,β**-unsaturated carboxylic acid include BONDFAST 7L (trade name) (manufactured by Sumitomo Chemical Co., Ltd.), BONDFAST 7M (trade name) (manufactured by Sumitomo Chemical Co., Ltd.), LOTADER AX8700 (trade name) (manufactured by SK global chemical Co. Ltd.), LOTADER AX8750 (trade name) (manufactured by SK global chemical Co. Ltd.) and the like.

The modified ethylene-**α**-olefin copolymer grafted with maleic anhydride may be any polymer which falls under this category, and especially, it is preferred that the weight ratio of units based on ethylene: units based on the α-olefin: units based on maleic anhydride is 50 to 98 : 45 to 1 : 5 to 1 to secure strong adhesion of the polyarylene sulfide composition to metals. Specific examples include a modified linear low-density polyethylene grafted with maleic anhydride, a modified ethylene-propylene rubber grafted with maleic anhydride and the like. The modified ethylene-**α**-olefin copolymer grafted with maleic anhydride may be obtained by a grafting reaction in the presence of an ethylene-**α**-olefin copolymer, a peroxide and maleic anhydride.

The **α**-olefin in the ethylene copolymer (B) is **an α**-olefin having as least three carbon atoms, such as propylene, butene-1,4-methylpentene-1, hexene-1 and octene-1. **The alkyl ester of an α,β**-unsaturated carboxylic acid may, for example, be an alkyl ester of acrylic acid or methacrylic acid, such as methyl acrylate, ethyl acrylate, n-propyl acrylate, isopropyl acrylate, n-butyl acrylate, isobutyl acrylate, t-butyl acrylate, methyl methacrylate, ethyl methacrylate, n-propyl methacrylate, isopropyl methacrylate, n-butyl methacrylate, isobutyl methacrylate and t-butyl methacrylate. The glycidyl ester of an **α,β**-unsaturated carboxylic acid may, for example, be glycidyl acrylate, glycidyl methacrylate or the like.

The amount of the ethylene copolymer (B) is from 2 to 10 wt%, preferably from 3 to 8 wt%, in order to make a polyarylene sulfide composition with excellent heat/cold resistance and molding fluidity. If the amount of the ethylene copolymer (B) is less than 2 wt%, the resulting resin composition has poor heat/cold resistance. On the other hand, it is unfavorable that the amount is more than 10 wt%, because the resulting resin composition would have poor mechanical characteristics.

The glass fiber (C) in the polyarylene sulfide composition of the present invention has a boron oxide content of at most 1.5 wt% and a fluorine content of at most 0.1 wt%. If the glass fiber has a boron oxide content higher than 1.5 wt% or a fluorine content higher than 0.1 wt%, the resulting composition has poor chemical resistance and is unsuitable for making automobile parts, or electric or electronic equipment parts. The glass fiber preferably has a boron oxide content of at most 1 wt%, and is particularly preferably free of boron oxide, in order to make a stronger and more chemically resistant polyarylene sulfide composition. The glass fiber preferably has a fluorine content of at most 0.05 wt%, and is particularly preferably free of fluorine.

The glass fiber (C) may be any glass fiber having a boron content of at most 1.5 wt% and a fluorine content of at most 0.1 wt%, and may, for example, be aluminosilicate glass fiber (such as S-glass fiber), corrosion resistant silicate glass fiber (such as ECR-glass fiber), alkali-resistant glass fiber (such as AR-glass fiber) or the like.

The glass fiber (C) may be a glass fiber having a circular cross-section or a (flat) glass fiber having a cross section having an aspect ratio of from 2 to 8. The shape of the cross section is preferably elliptical, oval, semicircular, cocoon-shaped, rectangular or the like. The cross section of the glass fiber (C) preferably has a minor axis of from **6 to 16 µm in order to provide a polyarylene sulfide composition having excellent** mechanical strength and molding fluidity.

The glass fiber (C) may be in the form of chopped strands, milled fibers or a roving, preferably in the form of chopped strands, in view of ease of handling during preparation of a polyarylene sulfide composition. The glass fiber (C) may have a surface finish made of a functional compound such as an epoxy compound, an isocyanate compound, a silane compound and a titanate compound or a polymer, if necessary.

The amount of the glass fiber (C) is from 20 to 60 wt%. If the amount is less than 20 wt%, the resulting composition has poor mechanical characteristics and heat/cold resistance. On the other hand, if the amount exceeds 60 wt%, the resulting composition has poor molding fluidity.

It is preferred that the polyarylene sulfide composition of the present invention further comprises a mold release agent (D) to impart excellent molding fluidity. The mold release agent (D) is preferably at least one member selected from the group consisting of a polyethylene wax, a polypropylene wax, a fatty amide lubricant and a carnauba wax. Commercially available polyethylene wax, polypropylene wax, fatty amide lubricant and carnauba wax may be used. The fatty amide lubricant may, for example, be a higher fatty amide, ethylene bis(stearamide) or a polycondensate of a higher fatty acid and a diamine and may be any fatty amide which falls under this category, such as Light Amide WH-255 (trade name) (manufactured by Kyoeisha Chemical Co., Ltd.), which is a polycondensate of stearic acid, sebacic acid and ethylenediamine. The carnauba wax may be anything that is called a carnauba wax, such as Carnauba No. 1 powder (trade name) (manufactured by NIKKO RICA CORPORATION). The amount of the mold release agent (D) is preferably from 0.1 to 3 parts by weight per 100 parts by weight of the sum of the polyarylene sulfide (A), the ethylene polymer (B) and the glass fiber (C).

The polyarylene sulfide composition of the present invention may comprise carbon fibers; whiskers such as silicon nitride whiskers, basic magnesium sulfate whiskers, barium titanate whiskers, potassium titanate whiskers, silicon carbide whiskers, boron whiskers and zinc oxide whiskers; inorganic fibers such as rock wool, zirconia, barium titanate, silicon carbide, silica and blast furnace slag; organic fibers such as aramid fibers, phenol resin fibers and arylate fibers; or mineral fibers such as wollastonite and magnesium oxysulfate fibers, in such an amount that they do not spoil the effects of the present invention, and may comprise calcium carbonate, lithium carbonate, magnesium carbonate, zinc carbonate, mica, silica, talc, clay, calcium sulfate, kaolin, wollastonite, zeolite, silicon oxide, magnesium oxide, zirconium oxide, tin oxide, magnesium silicate, calcium silicate, calcium phosphate, magnesium phosphate, carbon black, hydrotalcite, glass powder, glass balloons or glass flakes in such an amount that they do not spoil the effects of the present invention.

The polyarylene sulfide composition of the present invention may comprise at least one ordinary additive such as a conventional nucleating agent like talc, kaolin or silica; a plasticizer like a polyalkylene oxide oligomer compound, a thioether compound, an ester compound or an organic phosphorus compound; an antioxidant; a heat stabilizer; a lubricant; a blowing agent or a silane coupling agent in such an amount that they do not spoil the effects of the present invention.

The polyarylene sulfide composition of the present invention may be used after blended with at least one thermosetting or thermoplastic resin such as an epoxy resin, a cyanate ester resin, a phenolic resin, polyimide, a silicone resin, polyester, polyamide, polyphenylene oxide, polycarbonate, polysulfone, polyetherimide, polyether ketone, polyether ether ketone, polyamide imide, polyamide elastomer, polyester elastomer and polyalkylene oxide, as long as it does not go beyond what the present invention intends.

The polyarylene sulfide composition of the present invention may be produced any method without particular restrictions, and a generally known mixing or blending method may be used. It may be produced, for example, by melt-kneading all the ingredients; by melt-kneading some of the ingredients, then adding the rest of the ingredients and continuing melt-kneading; or by melt-kneading some of the ingredients in a single or double screw extruder while adding the other ingredients through a side feeder. Ingredients to be added in small amounts may be added at the time of molding after the other ingredients are melt-kneaded and pelletized. The melt-kneading may be carried out by conventional hot melt-kneading techniques, using a single screw or double screw extruder, a kneader, a mill or a brabender, preferably using a double screw extruder, which shows good kneading performance. The kneading temperature is appropriately selected usually from the range of from 260 to 350°C, without particular restrictions.

The polyarylene sulfide composition of the present invention has particularly excellent acid resistance and excellent heat/cold resistance and mechanical strength and hence is suitably used in automobile parts or electrical or electronic parts.

### EXAMPLES

Now, the present invention will be described in further detail with reference to Examples. However, it should be understood that the present invention is by no means restricted thereto.

The polyarylene sulfide (A), the ethylene copolymers (B), the glass fibers (C) and the mold release agent (D) used In the Examples and Comparative Examples are mentioned below.

### <Polyarylene Sulfide (A)>

Poly(p-phenylene sulfide) (A) (hereinafter referred to as PPS (A-1)): melt viscosity 200 poises.

### <Ethylene Copolymer (B)>

Copolymer (B-1) of ethylene, **an alkyl ester of an α,β**-unsaturated carboxylic acid and maleic anhydride hereinafter referred to as ethylene copolymer (B-1)): BONDINE AX8390 (trade name) manufactured by SK global chemical Co. Ltd.

Copolymer (B-2) of ethylene, a glycidyl **ester of an α,β**-unsaturated carboxylic acid and an alkyl **ester of an α,β**-unsaturated carboxylic acid (hereinafter referred to as ethylene copolymer (B-2)): LOTADER AX8700 (trade name) manufactured by SK global chemical Co. Ltd.

### <Glass Fibers (C)>

Glass fiber (C-1); corrosion resistant silicate glass fiber (ECR-glass fiber), chopped strands manufactured by Taishan Fiberglass Inc., ECS319C-3 (trade name).

Glass fiber (C-2); aluminosilicate glass fiber (S-glass fiber), chopped strands manufactured by Taishan Fiberglass Inc., ESC329A-3 (trade name).

Glass fiber (C-3); aluminoborosilicate glass fiber (E-glass fiber), chopped strands manufactured by Taishan Fiberglass Inc., ECS309A-3-H (trade name).

### <Mold Release Agent (D)>

Fatty amide lubricant (D-1) (hereinafter referred to as mold release agent (D-1)); Light Amide WH-255 (trade name) manufactured by Kyoeisha Chemical Co., Ltd.

### <SYNTHETIC EXAMPLE 1 (Synthesis of PPS (A-1)>

Into a 15 L autoclave equipped with a stirrer, 1,814 g of sodium sulfide flakes (Na₂S·2.9H₂O), 48 g of 30% aqueous sodium hydroxide (30% NaOH aq) and 3,679 g of N-methyl-2-pyrrolidone were put and gradually heated to 200°C with stirring under nitrogen stream to remove 380 g of water. After cooling to 190°C, 2,107 g of p-dichlorobenzene and 985 g of N-methyl-2-pyrrolidone were added, and the reaction system was sealed under a nitrogen stream. The reaction system was heated to 225°C over 2 hours, and polymerization was carried out at 225°C for 1 hour. Then, the system was heated to 250°C over 25 minutes, and polymerization was carried out at 250°C for 3 hours. After the polymerization, N-methyl-2-pyrrolidone was recovered from the resulting polymer slurry by distillation under reduced pressure. The final temperature was 170°C, and the pressure was 4.7 kPa. Warm water at 80°C was added to the resulting cake to make the slurry concentration 20%, the resulting slurry was washed, warm water was added in the same manner again, the temperature was increased to 175°C, and the washing of poly(p-phenylene sulfide) was performed a total of two times. The poly(p-phenylene sulfide) was dried at 105°C for 1 day. The dry poly(p-phenylene sulfide) was cured in a batch-type rotary kiln furnace by heating to 235°C under a nitrogen atmosphere for 1 hour to obtain PPS (A-1) having a melt viscosity of 200 poises.

### -Measurement of Melt Viscosity of Polyarylene Sulfide-

The melt viscosity was measured with a Koka flowtester equipped with a 2 mm-long die having a diameter of 1 mm (CFT-500 (trade name) manufactured by Shimadzu Corporation) at 315°C under a load of 10 kg.

### -Measurement of Tensile Strength-

A test specimen was molded from a polyarylene sulfide composition through an injection molding machine (SE-75S (trade name) manufactured by Sumitomo Heavy Industries, Ltd.) at a cylinder temperature of 310°C and a mold temperature of 135°C, and tensile strength was measured with a tensile tester (Autograph AG-5000B (trade name), manufactured by Shimadzu Corporation) in accordance with ISO 527.

### -Assessment of Acid Resistance-

A test specimen was molded from a polyarylene sulfide composition through an injection molding machine (SE-75S (trade name) manufactured by Sumitomo Heavy Industries, Ltd.) at a cylinder temperature of 310°C and a mold temperature of 135°C, and immersed in 5 wt% aqueous hydrogen fluoride at 60°C. Then, the tensile strength was measured with a tensile tester (Autograph AG-5000B (trade name), manufactured by Shimadzu Corporation) in accordance with ISO 527. The percentage of the tensile strength after the immersion to the initial tensile strength is defined as tensile strength retention, and when the tensile strength retention after 100 hours of immersion exceeded 90%, and the tensile strength retention after 250 hours exceeded 70%, the acid resistance was judged as good.

### -Measurement of Molding Fluidity-

A mold having a spiral groove having a dept of 1 mm and a width of 10 mm was mounted onto an injection molding machine (SE-75S (trade name) manufactured by Sumitomo Heavy Industries, Ltd.), and a PPS composition was supplied to the hopper of injection molding machine at a cylinder temperature of 310°C, an injection pressure of 190 MPa, a maximum injection speed, an injection time of 1.5 seconds, and a mold temperature of 135°C. The length the melt of the composition ran in the spiral groove in the mold was measured as an index of molding fluidity. A composition with a molding fluidity greater than 180 mm was judged as fluid enough for practical use.

### -Heat/Cold Resistance-

A 30 mm × 20 mm × 10 mm steel cuboid (carbon steel) as an insert was covered with a 1 mm-thick coating of a polyarylene sulfide composition by insert molding using an injection molding machine (SE-75S (trade name) manufactured by Sumitomo Heavy Industries, Ltd.) to obtain a test piece for heat/cold test. The test piece was subjected to a heat/cold cycle of 30 minutes of heating at 150°C and 30 minutes of cooling at -40°C repeatedly until crack development was recognized by the naked eye. The heat/cold resistance was evaluated based on the number of heat/cold cycles repeated until crack development, and when a test piece withstood at least 100 heat/cold cycles, the composition was judged as excellent in heat/cold resistance.

### -Elemental Analysis of Glass Fibers-

A glass fiber was coated with a conductive coating of osmium and subjected to quantitative elemental analysis by energy-dispersive X ray spectroscopy (FE-SEM JSM-7100F/EDS JED-2300 manufactured by JEOL Ltd.) at an acceleration voltage of 15 kV, and the content of each element in the glass fiber was expressed in wt%. 0 wt% means that the content of an element was below the detection limit. The results are shown in Table 1.

**[Table 1]**

| Glass fiber (C) | Boric acid content (wt%) | Fluorine content (wt%) |
|---|---|---|
| Glass fiber (C-1) | 0 | 0 |
| Glass fiber (C-2) | 1.2 | 0 |
| Glass fiber (C-3) | 8.5 | 3 |

### EXAMPLE 1

A mixture comprising 85.2 wt% of PPS (A-1) obtained in Synthetic Example 1, 14 wt% of ethylene copolymer (B-1) and 0.8 wt% of mold release agent (D-1) was fed into the hopper of a double screw extruder with a cylinder heated to 300°C (TEM-35-102B (trade name), manufactured by SHIBAURA MACHINE CO., LTD.) was melt-kneaded with glass fiber (C-1) fed into the hopper of the side feeder of the double screw extruder to obtain pellets of a polyarylene sulfide composition. The polyarylene sulfide composition comprised 42.6 wt% of PPS (A-1), 7 wt% of ethylene copolymer (B-1), 50 wt% of glass fiber (C-1) and 0.4 wt% of mold release agent (D-1). The heat/cold resistance, fluidity and acid resistance of the PPS composition was evaluated. The results are shown in Table 2.

### EXAMPLES 2 TO 4

Compositions were prepared in the same manner as in Example 1 except that polyarylene sulfide (A), ethylene copolymers (B), glass fibers (C) and mold release agent (D) were used in the amounts shown in Table 2, and evaluated in the same manner as in Example 1. The results are shown in Table 2.

### COMPARATIVE EXAMPLE 1

A composition was prepared in the same manner as in Example 1 except that polyarylene sulfide (A), ethylene copolymers (B), glass fibers (C) and mold release agent (D) were used in the amounts shown in Table 2, and evaluated in the same manner as in Example 1. The results are shown in Table 2.

The resulting composition showed low retention and was poor in acid resistance.

### COMPARATIVE EXAMPLE 2

A composition was prepared in the same manner as in Example 1 except that polyarylene sulfide (A), ethylene copolymers (B), glass fibers (C) and mold release agent (D) were used in the amounts shown in Table 2, and evaluated in the same manner as in Example 1. The results are shown in Table 2.

The resulting composition was poor in heat/cold resistance.

**[Table 2]**

| | | | Unit | Ex. 1 | Ex. 2 | Ex. 3 | Ex. 4 | Comp. Ex. 1 | Comp. Ex. 2 |
|---|---|---|---|---|---|---|---|---|---|
| Amount | Polyarylene sulfide (A) | | wt% | | | | | | |
| | | PPS(A-1) | | 42.6 | 42.6 | 42.6 | 62.6 | 42.6 | 77.6 |
| | Ethylene copolymer (B) | | | | | | | | |
| | | Ethylene copolymer (B-1) | | 7 | | 7 | | 7 | 7 |
| | | Ethylene copolymer (B-2) | | | 7 | | 7 | | |
| | Glass fiber (C) | | | | | | | | |
| | | Glass fiber (C-1) | | 50 | 50 | | 30 | | 15 |
| | | Glass fiber (C-2) | | | | 50 | | | |
| | | Glass fiber (C-3) | | | | | | 50 | |
| | Mold release agent (D) | | | | | | | | |
| | | Mold release agent (D-1) | | 0.4 | 0.4 | 0.4 | 0.4 | 0.4 | 0.4 |
| Evaluation | Tensile strength | | MPa | 160 | 182 | 158 | 182 | 167 | 56 |
| | Tensile strength after 100 hours of immersion | | MPa | 144 | 164 | 143 | 164 | 120 | 54 |
| | | Tensile strength retention | % | 90 | 90 | 91 | 90 | 72 | 96 |
| | Tensile strength after 250 hours of immersion | | MPa | 128 | 151 | 125 | 136 | 99 | 48 |
| | | Tensile strength retention | % | 80 | 83 | 73 | 83 | 59 | 85 |
| | Molding fluidity | | mm | 235 | 185 | 229 | 196 | 258 | 310 |
| | Number of heat/cold cycles | | cycles | 120 | 160 | 110 | 480 | 130 | 30 |

The entire disclosure of Japanese Patent Application No. 2021-123489 filed on July 28, 2021 including specification, claims and summary is incorporated herein by reference in its entirety.

### INDUSTRIAL APPLICABILITY

The polyarylene sulfide composition of the present invention has good acid resistance, chemical resistance, heat/cold resistance and fluidity in addition to the heat resistance, mechanical strength and electrical insulation properties inherent in PAS and is expected to be used for making automobile parts or electric and electronic parts.

## Claims

1. A polyarylene sulfide composition comprising from 30 to 70 wt% of polyarylene sulfide (A), from 2 to 10 wt% of an ethylene polymer (B) and from 20 to 60 wt% of glass fiber (C), wherein the glass fiber (C) has a boron oxide content of at most 1.5 wt% and a fluorine content of at most 0.1 wt%.

2. The polyarylene sulfide composition according to Claim 1, which further comprises at least one mold release agent (D) selected from the group consisting of a polyethylene wax, a polypropylene wax, a carnauba wax and a fatty amide wax.

3. The polyarylene sulfide composition according to Claim 1 or 2, wherein the ethylene polymer (B) is at least one modified ethylene polymer selected from the group consisting of a copolymer (B-1) of ethylene, **an alkyl ester of an α,β**-unsaturated carboxylic acid and maleic anhydride, a copolymer (B-2) of ethylene and a glycidyl ester **of an α,β**-unsaturated carboxylic acid, a copolymer (B-3) of ethylene, a glycidyl ester of **an α,β**-unsaturated carboxylic acid and vinyl acetate, a copolymer (B-4) of ethylene, a glycidyl **ester of an α,β-unsaturated carboxylic acid and an alkyl ester of an α,β-**unsaturated carboxylic acid, and a modified ethylene polymer (B-5) grafted with maleic anhydride.
